# EUROPÄISCHE PATENTSCHRIFT

(11) **EP 1 145 663 B1**
(45) Veröffentlichungstag und Bekanntmachung des Hinweises auf die Patenterteilung: **15.09.2004**
(21) Anmeldenummer: 01106287.4
(22) Anmeldetag: 15.03.2001
(51) Int. Cl.: A45D 42/16

(54) **Kosmetikspiegel**
Vanity mirror
Miroir de courtoisie

(30) Priorität: 11.04.2000 DE 20006654 U
(43) Veröffentlichungstag der Anmeldung: 17.10.2001
(73) Patentinhaber: Sieper-Werke GmbH, 57271 Hilchenbach-Müsen (DE)
(72) Erfinder: Kosrowi, Cyrus, 65187 Wesbaden (DE)
(74) Vertreter: Schneck, Herbert, Dipl.-Phys., Dr.

(56) Entgegenhaltungen:
- US-A- 4 527 760
- US-A- 4 842 174
- US-A- 5 604 633
- PATENT ABSTRACTS OF JAPAN vol. 1996, no. 10, 31. Oktober 1996 (1996-10-31) & JP 08 150058 A (INAX CORP), 11. Juni 1996 (1996-06-11)

## Beschreibung

Die Erfindung richtet sich auf einen Kosmetikspiegel umfassend ein Gehäuse und einen in dem Gehäuse gelagerten Vergrößerungsspiegel, wobei das Gehäuse über eine Halteeinrichtung relativ zum Gesicht des Benutzers positionseinstellbar ist und wobei die Halteeinrichtung durch einen flexiblen, eigensteifen und endlagenstabilen Schlauch gebildet ist.

Ein derartiger Kosmetikspiegel ist aus US-A-5,604,633 bekannt.

Herkömmliche derartige Kosmetikspiegel sind beispielsweise über ein schwenkbar gelagertes Scherengitter an der Wand befestigt. Durch die Schwenklagerung lässt sich eine Winkeleinstellung erreichen und über das Scherengitter die Entfernung des Spiegels zur Wand verändern. Eine Höheneinstellung ist in der Regel nicht möglich, so dass ein solcher Spiegel beispielsweise nicht gleichermaßen in optimaler Weise als Rasierspiegel für einen größeren Mann und als Kosmetikspiegel für eine kleinere Frau verwendbar ist. Ein weiterer Nachteil besteht darin, dass ein Scherengitter optisch nicht besonders ansprechend und aufgrund seiner Feingliedrigkeit auch schwer zu reinigen ist.

Hiervon ausgehend liegt der Erfindung die Aufgabe zugrunde, einen Kosmetikspiegel der eingangs genannten Art so auszugestalten, dass dessen Handhabung gegenüber vorbekannten Lösungen deutlich verbessert wird und ein modernes, ansprechendes Design realisierbar ist.

Diese Aufgabe wird erfindungsgemäß dadurch gelöst, dass eine Klemmeinrichtung bestehend aus einem an der Wand anbringbaren Befestigungsteil und einem Klemmschieber, der den Schlauch übergreifend derart auf das Befestigungsteil aufschiebbar ist, dass eine Verkeilung eintritt, durch welche der Schlauch und damit der Kosmetikspiegel definiert festgelegt werden

Hierdurch ist nicht nur eine Verstellung des Abstandes zwischen Spiegel und Wand, sondern auch eine nahezu beliebige Höheneinstellung möglich, wobei der Schlauch mit einer einzigen Wischbewegung leicht zu reinigen ist. Das Erscheinungsbild hebt sich von bekannten Designs durch ein elegantes Aussehen ab und es wird eine sichere und einfache Handhabung mit einer Hand ermöglicht. Hierdurch wird eine einfache, werkzeuglose Befestigung sowohl bei der Erstmontage als auch beim Abnehmen zu Reinigungszwecken erreicht.

In weiterer Ausgestaltung der Erfindung ist vorgesehen, dass der Schlauch durch eine Federdrahtspirale mit aufgewickeltem Dreikantdraht gebildet ist. Hierdurch wird es möglich, auch das vergleichsweise hohe Gewicht des Spiegels samt Gehäuse endlagenstabil zu lagern, wobei die Verstellbewegung trotzdem ohne wesentlichen Kraftaufwand bewerkstelligt werden kann.

Der Schlauch kann eine flexible äußere Abdeckungsfolie aufweisen, welche einerseits eine beliebige Farbgestaltung ermöglicht und andererseits die leichte Reinigung unterstützt und Ablagerungen in den einzelnen Spiralwindungen vermeidet.

Bei einer Ausführungsform, bei welcher das Spiegelglas bzw. der Bereich vor dem Spiegelglas beleuchtbar ist, kann das Licht gleichmäßig durch den transparenten Leuchtring nach außen treten, wobei vorgesehen sein kann, dass die elektrischen Leitungen für die Beleuchtung im inneren des Schlauches geführt sind, was ebenfalls ästhetisch besonders ansprechend ist.

Schließlich kann auch noch eine Netzteilhalterung vorgesehen sein.

Nachfolgend wird die Erfindung anhand eines bevorzugten Ausführungsbeispiels in Verbindung mit der Zeichnung näher erläutert. Dabei zeigen:

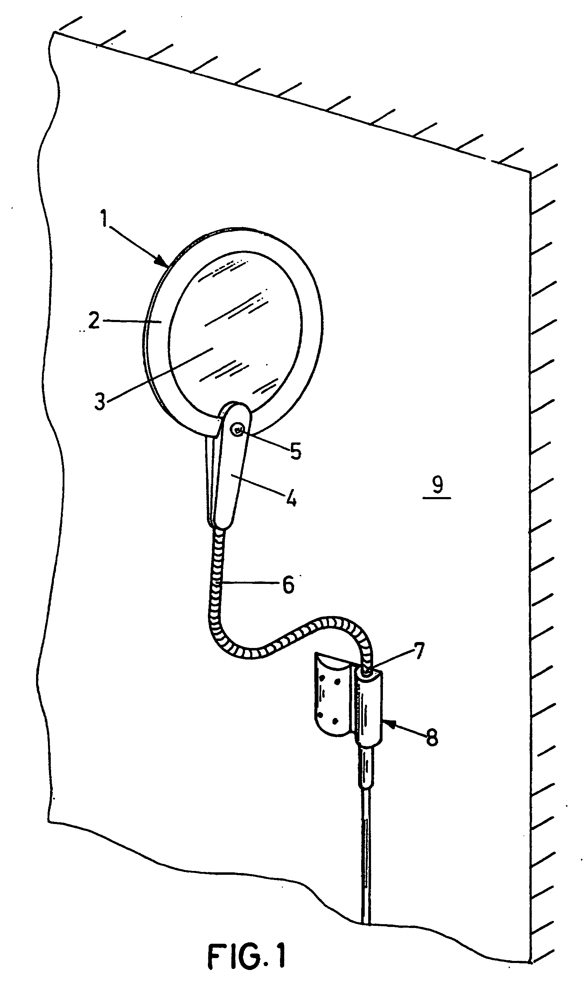

Fig. 1 eine perspektivische Ansicht eines erfindungsgemäßen Kosmetikspiegels mit Klemmeinrichtung und
Fig. 2 eine Explosionsdarstellung der Klemmeinrichtung.

Ein in der Zeichnung dargestellter Kosmetikspiegel I umfasst eine Gehäuse 2 mit einem Vergrößerungsspiegel und einem transparenten Leuchtring sowie einem Spiegelglas 3. Das Gehäuse 2 ist mit einem Handgriff 4 verbunden, an welchem ein Schalter 5 zum aus- und einschalten der Beleuchtungseinrichtung vorgesehen ist.

Das Gehäuse 2 ist über den Handgriff 4 mit einem flexiblen Metallschlauch 6 verbunden, der durch eine Federstahldrahtspirale mit aufgewickeltem Dreikantdraht gebildet ist, die mit einer Abdeckhülle versehen ist. Durch den Griff 4 wird ein Verdrehungsschutz bewerkstelligt.

Das untere Ende 7 des Schlauches ist in einer Klemmeinrichtung 8 an der Wand 9 befestigt.

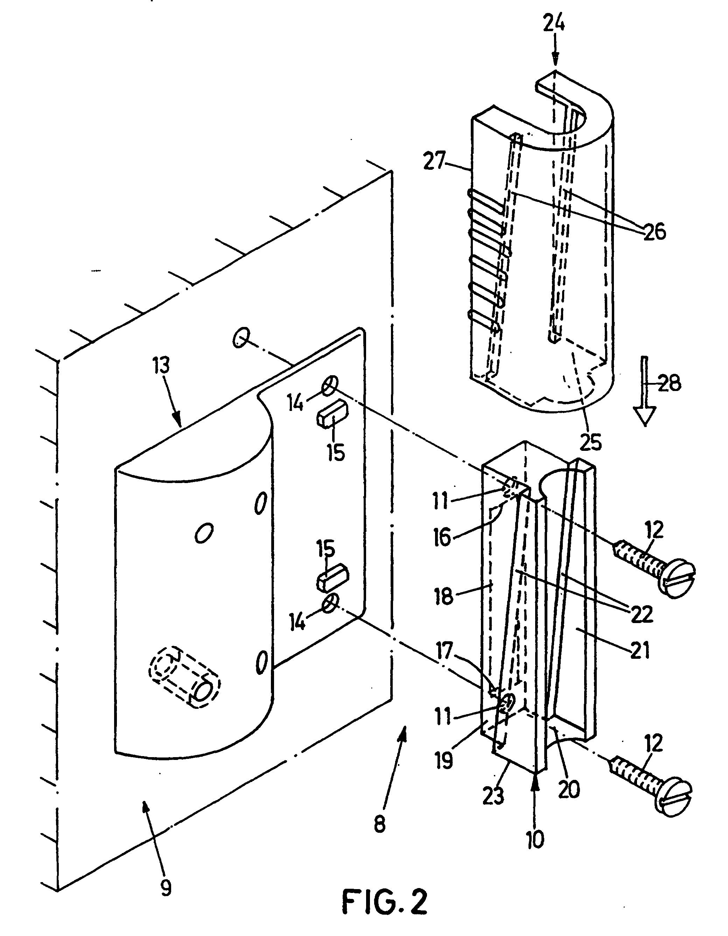

Die Klemmeinrichtung 8 ist in Fig. 2 näher dargestellt. Sie umfasst ein Befestigungsteil 10 mit Bohrungen 11, durch welche das Befestigungsteil 10 mittels Schrauben 12 an der Wand befestigt werden kann. Sofern ein Netzteil 13 vorgesehen ist, werden die Schrauben 12 durch Bohrungen 14 des Netzteils hindurchgeschraubt, welches unterhalb bzw. oberhalb der Bohrungen Positioniervorsprünge 15 aufweist, die mit der Oberkante 16 bzw. der Unterkante 17 einer Ausnehmung 18 an der Rückwand 19 des Befestigungsteils 10 zusammenwirken.

Das Befestigungsteil 10 weist eine innere Längsausnehmung 20 auf, wobei sich beiderseits der Längsausnehmung 20 an deren Seitenwänden 21 Stege 22 erstrecken, welche in einem Keilwinkel relativ zum Boden 23 der Längsausnehmung 20 verlaufen.

Ein Klemmschieber 24 weist eine Längsausnehmung 25 und nach innen vorspringende Stege 26 auf, welche einen Keilwinkel schräg zur Unterkante 27 aufweisen, der sich von dem durch die Stege 22 gebildeten Keilwinkel des Befestigungsteils 10 geringfügig unterscheidet, so dass eine Verklemmung auftritt.

Zur Befestigung des Kosmetikspiegels 1 an der Wand wird das untere Ende 7 des Schlauches 6 in der Ausnehmung 20 des Befestigungsteils 10 positioniert und der Klemmschieber 24 den Schlauch 6 übergreifend von unten in Richtung des Pfeils 28 so auf das Befestigungsteil 10 aufgeschobene, dass die Stege 26 des Klemmschiebers 24 die Stege 22 des Befestigungsteils 20 untergreifen und mit zunehmender Längs-Schiebebewegung eine Verkeilung eintritt, durch welche das Ende 7 des Schlauches 6 und damit der Kosmetikspiegel 1 definiert festgelegt wird.

Als Leuchtmittel kann beispielsweise eine 11 W-Sparlampe, hellweiß, mit einer im Griff integrierten G 23-Fassung verwendet werden. Tm Griff 4 ist günstigerweise ein Verdrehschutz für den flexiblen Schlauch 6 vorgesehen. der Vergrößerungsspiegel 3 wird in den Leuchtring eingeclipst, welcher seinerseits wieder in das Gehäuse 2 einclipsbar ist. Dabei rastet der Griff 4 unter den Leuchtring.

Ein erfindungsgemäßer Spiegel 1 kann außer der dargestellten Wandhalterung auch als Tisch-Kosmetik-Spiegel eingesetzt werden, indem der flexible Schlauch 6 unter Ausbildung einer Standfläche im Bereich seines unteren Endes umgebogen wird.

## Patentansprüche

1. Kosmetikspiegel umfassend ein Gehäuse und einen in dem Gehäuse gelagerten Vergrößerungsspiegel, wobei das Gehäuse über eine Halteeinrichtung relativ zum Gesicht des Benutzers positionseinstellbar ist, und wobei die Halteeinrichtung durch einen flexiblen, eigensteifen und endlagenstabilen Schlauch gebildet ist, **dadurch gekennzeichnet, dass** eine Klemmeinrichtung (8) bestehend aus einem an der Wand anbringbaren Befestigungsteil (10) und einem Klemmschieber (24), der den Schlauch (6) übergreifend derart auf das Befestigungsteil (10) aufschiebbar ist, dass eine Verkeilung eintritt, durch welche der Schlauch (6) und damit der Kosmetikspiegel (1) definiert festgelegt werden.

2. Kosmetikspiegel nach Anspruch 1, **dadurch gekennzeichnet, dass** der Schlauch (6) durch eine Federstahldrahtspirale mit aufgewickeltem Dreikantdraht gebildet ist.

3. Kosmetikspiegel nach Anspruch 2, **dadurch gekennzeichnet, dass** der Schlauch (6) eine flexible äußere Abdeckhülle aufweist.

4. Kosmetikspiegel nach Anspruch 1, **dadurch gekennzeichnet, dass** der Schlauch mittels einer Klemmeinrichtung (8) an der Wand (9) befestigbar ist.

5. Kosmetikspiegel nach Anspruch 1, wobei das Spiegelglas bzw. der Bereich vor dem Spiegelglas beleuchtbar ist, **dadurch gekennzeichnet, dass** die elektrischen Leitungen für die Beleuchtung im Inneren des Schlauches (6) geführt sind.

6. Kosmetikspiegel nach Anspruch 5, **dadurch gekennzeichnet, dass** eine Netzteilhalterung vorgesehen ist.

## Claims

1. Cosmetic mirror comprising a housing and a magnifying mirror stored in the housing, the housing being adjustable in its position relative to the face of the user via a retaining device, and the retaining device being formed by a flexible and inherently rigid tube that is stable in its end positions, **characterised in that** a fixing device (8) comprising a fastening part (10) that may be attached to the wall and a fixing slider (24), which, overlapping the tube (6), may be slid onto the fastening part (10) such that wedging occurs, by means of which the tube (6) and, as a result, the cosmetic mirror (1) are delimited in a defined manner

2. Cosmetic mirror according to claim 1, **characterised in that** the tube (6) is formed by a spring steel wire helix comprising a wound triangular wire.

3. Cosmetic mirror according to claim 2, **characterised in that** the tube (6) comprises a flexible outer casing.

4. Cosmetic mirror according to claim 1, **characterised in that** the tube may be fastened to the wall (9) by means of fixing device (8).

5. Cosmetic mirror according to claim 1, wherein the mirror glass or the region in front of the mirror glass may be illuminated, **characterised in that** the electric lines for the illumination are fed inside the tube (6).

6. Cosmetic mirror according to claim 5, **characterised in that** a power supply unit holder is provided.

## Revendications

1. Miroir de maquillage comprenant un boîtier et un miroir grossissant logé dans le boîtier, sachant que la position du boîtier est orientable par l'intermédiaire d'un dispositif de maintien par rapport au visage de l'utilisateur et sachant que le dispositif de maintien est formé par une gaine flexible, stable en fin de course et suffisamment rigide, **caractérisé en ce qu'**un dispositif de serrage (8) se composant d'une pièce de fixation (10) pouvant être ajoutée à la paroi et d'un curseur de serrage (24) qui peut coulisser sur la pièce de fixation (10) en empiétant sur le tuyau de telle sorte qu'il se produit un calage, par lequel le tuyau (6) et de ce fait le miroir de maquillage (1) sont fixés de manière définie.

2. Miroir de maquillage selon la revendication 1, **caractérisé en ce que** le tuyau (6) est formé par une spirale de ressort en fil d'acier avec un fil triangulaire enroulé.

3. Miroir de maquillage selon la revendication 2, **caractérisé en ce que** le tuyau (6) comporte une enveloppe de protection externe flexible.

4. Miroir de maquillage selon la revendication 1, **caractérisé en ce que** le tuyau peut être fixé à la paroi (9) par un dispositif de serrage (8).

5. Miroir de maquillage selon la revendication 1, sachant que la glace du miroir ou selon le cas la zone devant la glace du miroir peut être éclairée, **caractérisé en ce que** les lignes électriques pour l'éclairage sont introduites à l'intérieur du tuyau (6).

6. Miroir de maquillage selon la revendication 5, **caractérisé en ce qu'**une fixation du bloc d'alimentation est prévue.
